# EUROPÄISCHE PATENTANMELDUNG

(11) **EP 2 423 550 A2**
(43) Veröffentlichungstag der Anmeldung: **29.02.2012**
(21) Anmeldenummer: 11171846.6
(22) Anmeldetag: 29.06.2011
(51) Int. Cl.: F16L 5/00

(54) **Vorrichtung zum Durchführen von Leitungen**

(30) Priorität: 23.08.2010 DE 102010035176
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft eine Vorrichtung (10, 110, 210, 310) zum Durchführen von Leitungen durch eine Öffnung (26) in einer Wand (24) mit einem sich von einem ersten zu einem zweiten Ende (18, 20) erstreckenden Aufnahmekanal (16) für die Leitungen, mit einer Einführöffnung (28) zur Aufnahme eines Endabschnitts eines Schutzschlauchs (30) am ersten Ende (18), mit Mitteln (32) zum Fixieren des Schutzschlauchs (30), mit einer sich vom zweiten Ende (20) aus erstreckenden Befestigungspartie (22) zum Durchführen durch die Wandöffnung (26) und mit Befestigungsmitteln zum Befestigen an der Wand. Die Durchführvorrichtung (10, 110, 210, 310) weist erfindungsgemäß ein einen sich vom ersten Ende (18) aus erstreckenden ersten geraden Abschnitt (34) des Aufnahmekanals (16) aufweisendes Schlauchaufnahmeteil (12) auf und ein die Befestigungspartie (22) sowie einen sich vom zweiten Ende (20) aus erstreckenden zweiten geraden Abschnitt (36) des Aufnahmekanals (16) aufweisendes, um mindestens eine Drehachse (56) gegenüber dem Schlauchaufnahmeteil (12) begrenzt von einer Linearausrichtung, in der die Mittelachsen (38) der beiden geraden Abschnitte (34, 36) zueinander parallel verlaufen, in mindestens eine Querausrichtung, in der die Mittelachsen (38) der beiden geraden Abschnitte (34, 36) quer zueinander verlaufen, verdrehbares wandseitiges Teil (14).

## Beschreibung

Die Erfindung betrifft eine Vorrichtung zum Durchführen von Leitungen durch eine Öffnung in einer Wand gemäß Oberbegriff des Anspruchs 1.

Bekannte Vorrichtungen dieser Art, die auch als Schlauchverschraubungen bezeichnet werden, dienen dazu, einen Schutzschlauch, insbesondere einen Wellschlauch, durch Einklemmen zu befestigen. Der Schutzschlauch schützt durch den Aufnahmekanal der Schlauchverschraubung durchgeführte Leitungen, wie beispielsweise elektrische Kabel. Eine Schlauchverschraubung wird in der Regel in eine Gehäuseöffnung eingesetzt, durch die Leitungen aus einem Gehäuse herausgeführt werden. Bei den meisten bekannten Schlauchverschraubungen verläuft der Aufnahmekanal gerade und insbesondere senkrecht zur Wand. Dies hat zur Folge, dass sowohl die durchgeführten Leitungen als auch der Schutzschlauch in etwa im rechten Winkel zur Wand angeordnet sind. Diese Anordnung birgt insbesondere dann Schwierigkeiten, wenn wenig Platz zur Verfügung steht. Dem Problem, dass der Schutzschlauch in einigen Anwendungsfällen aus Platzgründen ein Stück weit parallel zur Wand verlaufen muß, bevor er in die Schlauchverschraubung mündet, wurde beim Gegenstand der DE 103 38 542 A1 dadurch begegnet, dass die Schlauchverschraubung einen gekrümmten Aufnahmekanal aufweist. Dadurch wird vermieden, dass der nur begrenzt biegsame Schutzschlauch nahe der Wand abgeknickt werden muß. Allerdings gibt auch die aus der DE 103 38 542 A1 bekannte Schlauchverschraubung eine feste Winkelstellung zwischen dem Schutzschlauch und der Wand vor. Für unterschiedliche Einsatzzwecke müssen daher unterschiedliche Schlauchverschraubungen mit unterschiedlichen Biegungen des Aufnahmekanals vorgehalten werden. Zudem ist bei solchen gekrümmten Schlauchverschaubungen die Verlegung der Kabel, die über die Krümmung durch die Verschraubung geschoben werden müssen, oft mühsam und zeitaufwendig. Auch die Packungsdichte der Kabel kann dadurch eingeschränkt sein.

Es ist daher Aufgabe der Erfindung, eine Vorrichtung der eingangs genannten Art derart weiterzubilden, dass sie einfacher handhabbar ist.

Die Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass das Schlauchaufnahmeteil und das wandseitige Teil von einer Linearausrichtung, in der die Mittelachsen der geraden Abschnitte des Aufnahmekanals zueinander parallel verlaufen und die geraden Abschnitte meist miteinander fluchten, in mindestens eine Querausrichtung gegeneinander verdreht werden können, so dass mindestens zwei Ausrichtungen der Schlauchverschraubung realisierbar sind. Bei einer stufenlosen Verdrehbarkeit der beiden Teile zueinander ist sogar eine Vielzahl von Ausrichtungen möglich. Somit können unterschiedliche Krümmungen des Aufnahmekanals durch ein und dasselbe Bauteil realisiert werden. Zudem ist es möglich, die Leitungen und den Schutzschlauch in der Linearausrichtung in die Schlauchverschraubung einzuführen, was für den Benutzer einfach zu bewerkstelligen ist und was eine gute Ausnutzung der möglichen Packungsdichte der Leitungen erlaubt. Anschließend kann die Schlauchverschraubung durch Verdrehen des Schlauchaufnahmeteils gegenüber dem wandseitigen Teil in die gewünschte Querausrichtung gebracht werden.

Gemäß einer ersten vorteilhaften Ausführungsform sind das Schlauchaufnahmeteil und das wandseitige Teil mittels eines Kugelgelenks miteinander verbunden, wobei ein erstes der Teile einen im zweiten Teil aufgenommenen Gelenkabschnitt aufweist. Dabei ist es möglich, dass das Schlauchaufnahmeteil einen im wandseitigen Teil aufgenommenen Gelenkabschnitt aufweist oder umgekehrt. Ein Kugelgelenk ermöglicht ein Verdrehen der beiden Teile gegeneinander in unterschiedliche Richtungen, so dass sich die Schlauchverschraubung bezüglich der möglichen Winkelstellungen durch eine größtmögliche Flexibilität auszeichnet. Dabei wird bevorzugt, dass das erste Teil einen zumindest abschnittsweise kugelsegmentförmigen Gelenkabschnitt aufweist, der in einem Gelenkabschnitt des zweiten Teils aufgenommen und bis zu einem Anschlag verdrehbar ist. Der Gelenkabschnitt des zweiten Teils kann dabei zumindest abschnittsweise kegelstumpfförmig sein.

Gemäß einer weiteren vorteilhaften Ausführungsform sind das Schlauchaufnahmeteil und das wandseitige Teil mittels eines Drehgelenks verbunden, das eine Drehachse aufweist, die senkrecht zu jeder der beiden Mittelachsen der geraden Abschnitte des Aufnahmekanals verläuft. Die Drehachse ist dadurch in ihrer räumlichen Ausrichtung festgelegt, und es ist nur eine Drehung um diese Drehachse möglich. In einer besonders einfachen Ausgestaltung wird die Drehachse durch zwei von einander abgewandten Seiten eines ersten der beiden Teile abstehenden Zapfen gebildet, die in Ausnehmungen im zweiten Teil eingreifen. Die beiden Teile liegen vorteilhaft in der Linearausrichtung auf Stoß aneinander an. Bei dieser Ausgestaltung ist es erforderlich, dass der Aufnahmekanal zwischen dem Schlauchaufnahmeteil und dem wandseitigen Teil zu einer Öffnung hin offen ist. Dabei wird bevorzugt, dass die Ränder der Öffnung konzentrisch zur Drehachse verlaufen und einen Anschlag beim gegenseitigen Verdrehen der beiden Teile bilden. Um die Öffnung gegenüber der Umgebung abzudichten, wird das Drehgelenk vorzugsweise von einem Faltenbalg eingeschlossen, der am Schlauchaufnahmeteil und am wandseitigen Teil befestigt ist.

Gemäß einer weiteren vorteilhaften Ausführungsform wird das Drehgelenk durch eine Partie eines ersten der Teile mit einer zylindrischen Innenkontur und eine Partie des zweiten Teils mit komplementärer zylindrischer Außenkontur gebildet, wobei das zweite Teil durch eine Öffnung im Zylindermantel des ersten Teils durchgeführt ist. Auch bei dieser Ausführungsform ist die Drehachse in ihrer räumlichen Ausrichtung festgelegt und entspricht der Mittelachse des Zylinders. Um den Aufnahmekanal gegen die Umgebung abzudichten, wird bevorzugt, dass die Öffnung im Zylindermantel des ersten Teils stets vom zweiten Teil ausgefüllt wird.

Gemäß einer weiteren vorteilhaften Ausführungsform weisen das Schlauchaufnahmeteil und das wandseitige Teil jeweils einen elliptischen Querschnitt auf und liegen entlang einer Kreisringfläche auf Stoß aneinander an. Dabei verlaufen die Mittelachsen der beiden geraden Abschnitte des Aufnahmekanals quer zur Flächennormalen der Kreisringfläche. Ein Verdrehen der beiden Teile erfolgt dann um eine Drehachse, die parallel zur Mittelachse des geraden Abschnitts des Aufnahmekanals im wandseitigen Teil verläuft und vorzugsweise mit dieser zusammenfällt. Die beiden Teile gleiten beim Verdrehen an der Kreisringfläche aufeinander.

Bei allen vorgeschlagenen Ausführungsformen kann vorteilhaft zwischen dem Schlauchaufnahmeteil und dem wandseitigen Teil eine Dichtung angeordnet sein, um den Aufnahmekanal besser gegen die Umgebung abzudichten und insbesondere das Eindringen von Schmutz oder Feuchtigkeit zu verhindern.

Im Folgenden wird die Erfindung anhand der in der Zeichnung in schematischer Weise dargestellten Ausführungsbeispiele näher erläutert. Es zeigen
Fig. 1 eine Durchführvorrichtung gemäß einem ersten Ausführungsbeispiel;
Fig. 2a, 2b eine Durchführvorrichtung gemäß einem zweiten Ausführungsbeispiel in der Linearausrichtung und in einer Querausrichtung, jeweils teilweise im Schnitt;
Fig. 3a, 3b eine Durchführvorrichtung gemäß einem dritten Ausführungsbeispiel in der Linearausrichtung und in einer Querausrichtung, jeweils teilweise im Schnitt und
Fig. 4a bis 4d eine Durchführvorrichtung gemäß einem vierten Ausführungsbeispiel in der Linearausrichtung und in einer Querausrichtung, jeweils in zwei verschiedenen Perspektiven und jeweils teilweise im Schnitt.

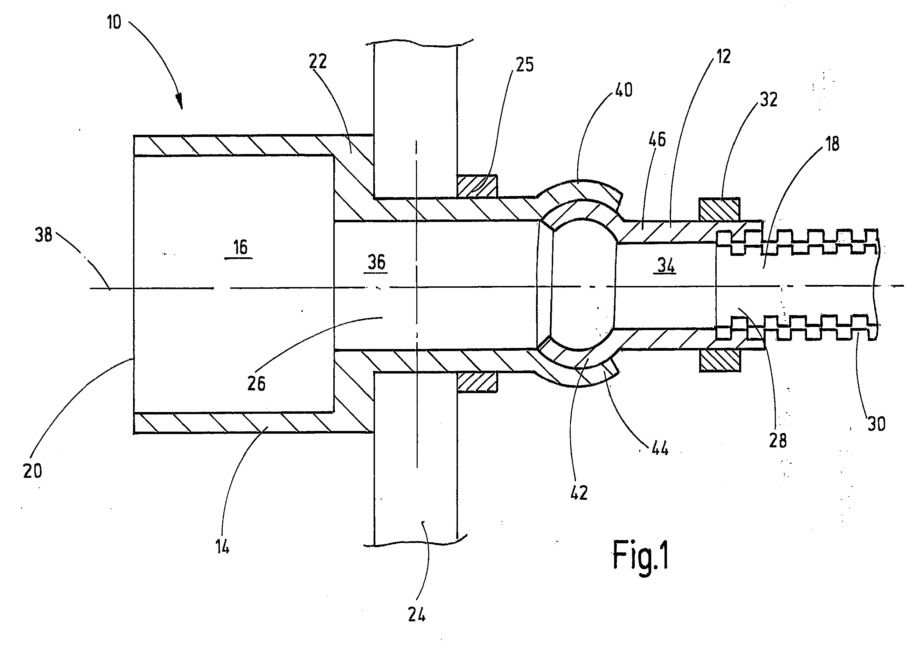

Die in Fig. 1 gezeigte Schlauchverschraubung 10 ist aus zwei Teilen zusammengesetzt, einem Schlauchaufnahmeteil 12 und einem wandseitigen Teil 14. Durch die Schlauchverschraubung 10 verläuft ein Aufnahmekanal 16 zur Aufnahme von Leitungen wie elektrischen Kabeln von einem ersten Ende 18 am Schlauchaufnahmeteil 12 bis zu einem zweiten Ende 20 am wandseitigen Teil 14. Das wandseitige Teil 14 weist eine Befestigungspartie 22 auf, die sich vom zweiten Ende 20 aus erstreckt und zum Befestigen an einer Wand 24 durch eine Öffnung 26 in der Wand 24 durchgeführt und mittels einer Schraubenmutter 25 fixiert wird. Das Schlauchaufnahmeteil 12 weist am ersten Ende eine Einführöffnung 28 für einen Endabschnitt eines Schutzschlauchs 30, insbesondere eines Wellschlauchs, auf. Zum Fixieren des Schutzschlauchs 30 weist das Schlauchaufnahmeteil 12 am ersten Ende 18 Fixiermittel in Form von sich in Richtung des Aufnahmekanals 16 erstreckenden Federn auf, die an ihren freien Enden Vorsprünge zum Eingriff in eine Nut des Schutzschlauchs tragen. Durch Beaufschlagung der Federn kann die Einführöffnung 28 zum Einklemmen des eingeführten Schutzschlauchs 30 verengt werden, wofür eine die Federn beaufschlagende Kappe 32 vorgesehen ist. Zur genaueren Ausgestaltung der Fixiermittel kann auf die DE 103 38 542 A1 verwiesen werden.

Der Aufnahmekanal 16 weist einen ersten geraden Abschnitt 34 im Schlauchaufnahmeteil 12 und einen zweiten geraden Abschnitt 36 im wandseitigen Teil 14 auf. In der in Fig. 1 gezeigten Linearausrichtung fallen die Mittelachsen 38 der geraden Abschnitte 34, 36 zusammen. Das Schlauchaufnahmeteil 12 und das wandseitige Teil 14 sind mittels eines Kugelgelenks 40 miteinander verbunden, wobei das Schlauchaufnahmeteil 12 einen kugelsegmentförmigen Gelenkabschnitt 42 aufweist, der in einem ebenfalls kugelsegmentförmigen oder kegelstumpfförmigen Gelenkabschnitt 44 des wandseitigen Teils 14 aufgenommen ist. Auf diese Weise können das Schlauchaufnahmeteil 12 und das wandseitige Teil 14 gegeneinander beliebig verdreht werden, wobei die jeweilige Drehachse durch den Mittelpunkt des kugelförmigen Gelenkabschnitts 42 verläuft. Der sich an den kugelförmigen Gelenkabschnitt 42 anschließende Endabschnitt 46 des Schlauchaufnahmeteils 12 bildet einen Anschlag für den Gelenkabschnitt 44 des wandseitigen Teils 14 und begrenzt somit die Verdrehbarkeit der beiden Teile 12, 14 zueinander.

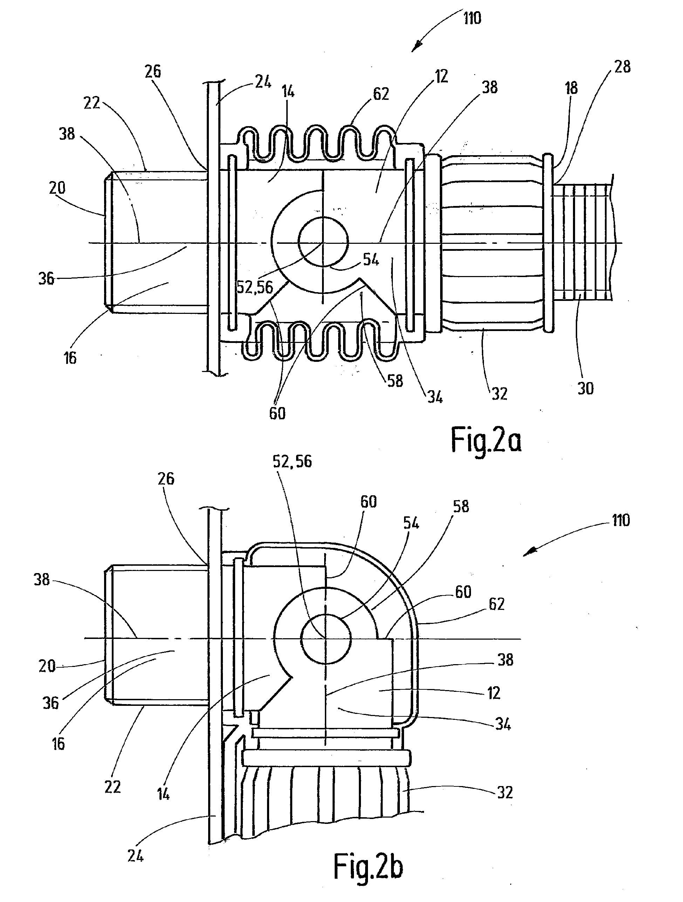

Die Schlauchverschraubung 110 gemäß dem zweiten Ausführungsbeispiel (Fig. 2a, 2b) beruht auf demselben Prinzip. Gleichwirkende Bauteile sind daher mit den gleichen Bezugszeichen versehen. Der Hauptunterschied zum ersten Ausführungsbeispiel besteht darin, dass das Schlauchaufnahmeteil 12 und das wandseitige Teil 14 mittels eines Drehgelenks 50 miteinander verbunden sind. Dieses weist zwei Zapfen 52 auf, die von einander abgewandten Seiten des wandseitigen Teils 14 abstehen. Das Schlauchaufnahmeteil 12 weist dementsprechend zwei Ausnehmungen 54 auf, in denen die Zapfen 52 aufgenommen sind. Im Bereich der Zapfen 52 und Ausnehmungen 54 überlappen sich die beiden Teile 12, 14 ein Stück weit. In den Bereichen außerhalb des Überlappungsbereichs liegen sie jedoch auf Stoß aneinander an. Wie in Fig. 2a, 2b gezeigt, können die Teile 12, 14 um eine durch die Zapfen 52 verlaufende Drehachse 56 von der in Fig. 2a gezeigten Linearausrichtung bis zu einem maximalen Verdrehwinkel von 90° (Fig. 2b) gegeneinander verdreht werden. Um dies zu ermöglichen, weist der Aufnahmekanal 16 eine Öffnung 58 auf, deren Ränder konzentrisch auf die Drehachse 56 zu verlaufen. Das Drehgelenk 50 wird von einem Faltenbalg 62 eingeschlossen, der rings umlaufend sowohl mit dem Schlauchaufnahmeteil 12 als auch mit dem wandseitigen Teil 14 verbunden ist und somit die Öffnung 58 abdichtet.

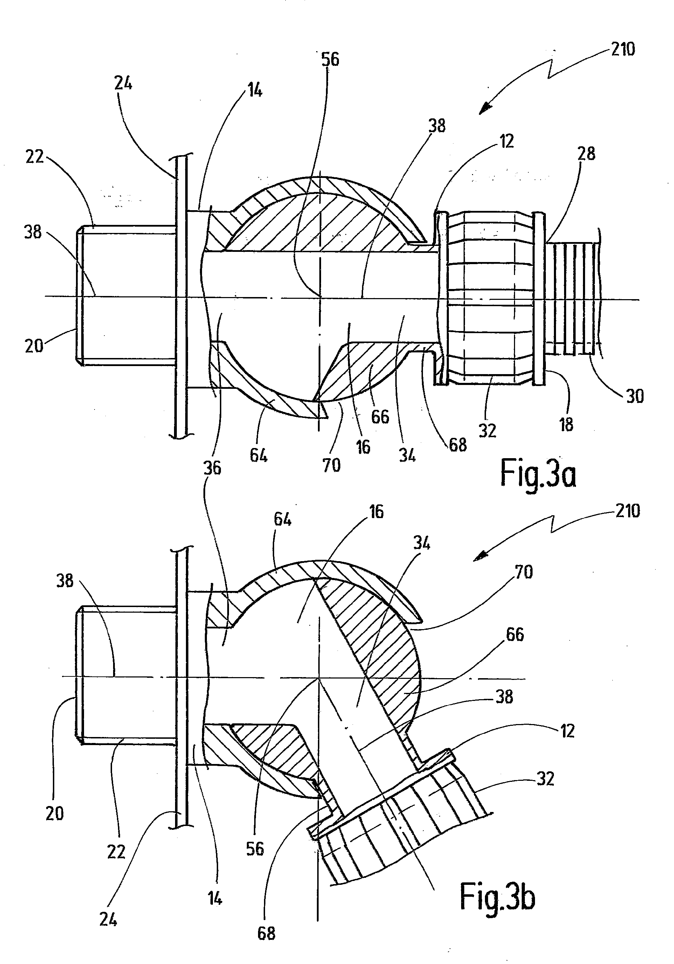

Auch in den das dritte Ausführungsbeispiel zeigenden Fig. 3a, 3b sind wieder Bauteile, die in den ersten beiden Ausführungsbeispielen entsprechend vorhanden sind, mit denselben Bezugszeichen versehen. Auch die Schlauchverschraubung 210 gemäß dem dritten Ausführungsbeispiel weist ein Drehgelenk 50 auf, das die Beweglichkeit der beiden Teile 12, 14 zueinander ermöglicht. Das Drehgelenk 50 wird durch eine Partie 64 des wandseitigen Teils 14 mit einer zylindrischen Innenkontur gebildet, die in Fig. 3a, 3b im Querschnitt dargestellt ist. In der Partie 64 ist eine Partie 66 des Schlauchaufnahmeteils 12 mit einer komplementären zylindrischen Außenkontur aufgenommen und fest mit einer die Fixiermittel aufweisenden und die Kappe 32 tragenden Endpartie 68 verbunden. Die Endpartie 68 ragt aus einer Öffnung 70 im Zylindermantel 64, deren Ränder somit einen Anschlag bilden, der die Verdrehbarkeit der Teile 12, 14 zueinander im hier gezeigten Ausführungsbeispiel auf einen Maximalwinkel von ca. 45° begrenzt. Desweiteren kann ein auf das Schlauchaufnahmeteil 12 aufsteckbarer Deckel vorgesehen sein, der die beiden Teile 12, 14 in der jeweiligen Position fixiert. Die Partie 66 des Schlauchaufnahmeteils 12 füllt zudem die Öffnung 70 vollständig aus, so dass diese gegenüber der Umgebung nicht abgedichtet werden muß.

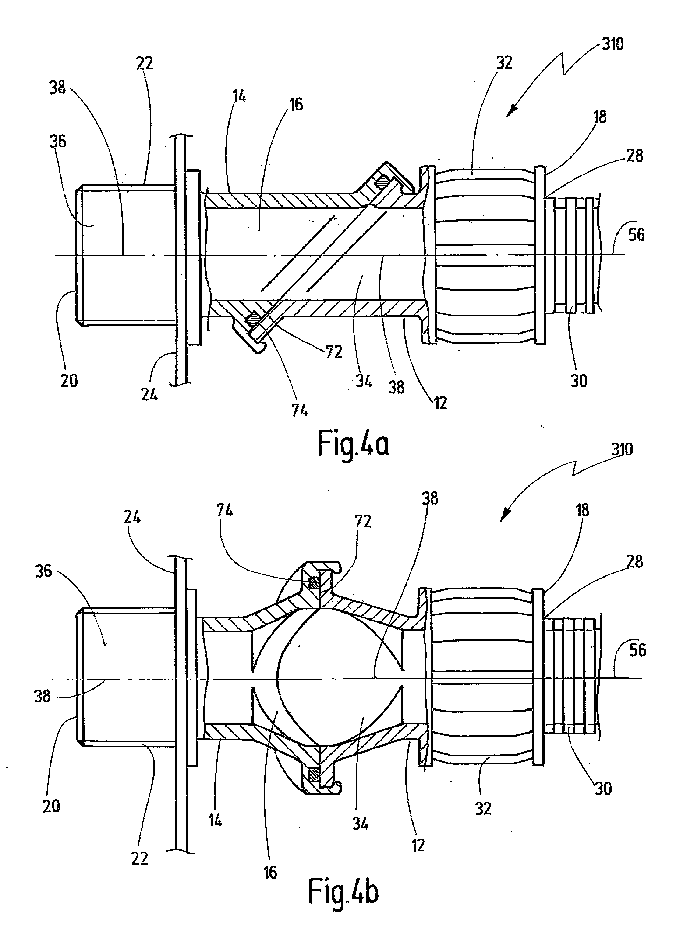

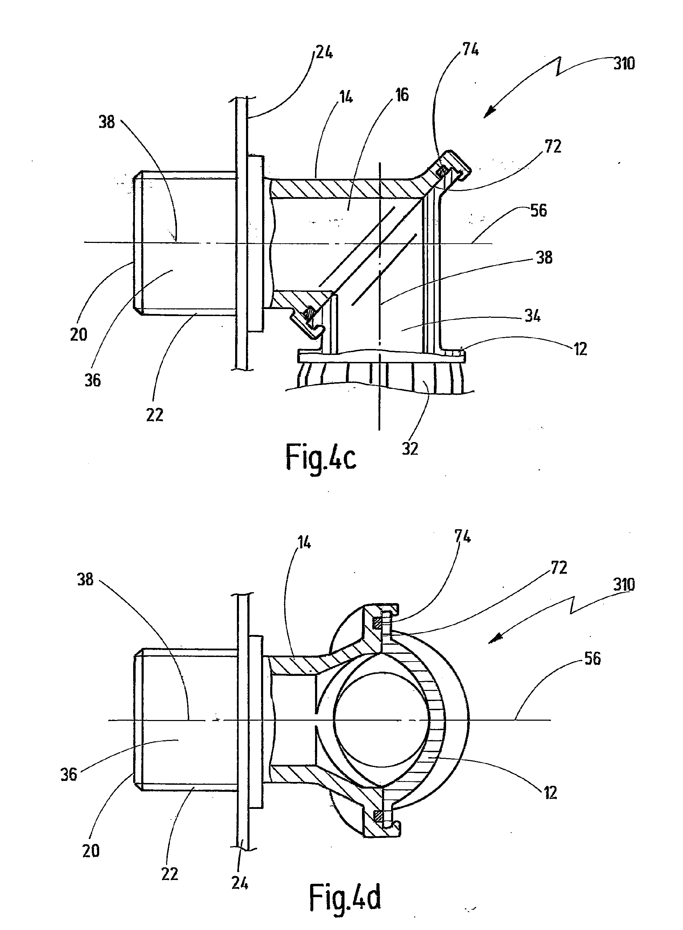

Auch die Schlauchverschraubung 310 gemäß dem vierten Ausführungsbeispiel (Fig. 4a bis 4d) ermöglicht eine Abwinkelung des Schlauchaufnahmeteils 12 gegenüber dem wandseitigen Teil 14. Zu diesem Zweck liegen beide Teile 12, 14 auf Stoß aneinander an und weiten sich von den Enden 18, 20 ausgehend bis zur Anlagefläche 72 von einem kreisrunden auf einen elliptischen Querschnitt auf. Die Anlagefläche 72 ist schräg gestellt, so dass ihre Flächennormale quer zu den Mittelachsen 38 der geraden Abschnitte 34, 36 des Aufnahmekanals 16 verläuft. Auf diese Weise ist es möglich, die Anlagefläche 72 als Kreisringfläche auszubilden, so dass ein Verdrehen der Teile 12, 14 um die Mittelachse des zweiten geraden Abschnitts 36 als Drehachse 56 erfolgen kann. Dies ist in Fig. 4a bis 4d schematisch gezeigt, wobei Fig. 4a, 4b die Linearausrichtung und Fig. 4c, 4d eine Querausrichtung mit dem maximal zwischen dem ersten geraden Abschnitt 34 und dem zweiten geraden Abschnitt 36 erzielbaren Knickwinkel von 90° zeigen. Zwischen dem Schlauchaufnahmeteil 12 und dem wandseitigen Teil 14 ist zum Abdichten des Aufnahmekanals 16 gegenüber der Umgebung zudem an der Anlagefläche 72 ein Dichtring 74 angeordnet.

Zusammenfassend ist folgendes festzuhalten:
Die Erfindung betrifft eine Vorrichtung 10, 110, 210, 310 zum Durchführen von Leitungen durch eine Öffnung 26 in einer Wand 24 mit einem sich von einem ersten zu einem zweiten Ende 18, 20 erstreckenden Aufnahmekanal 16 für die Leitungen, mit einer Einführöffnung 28 zur Aufnahme eines Endabschnitts eines Schutzschlauchs 30 am ersten Ende 18, mit Mitteln 32 zum Fixieren des Schutzschlauchs 30, mit einer sich vom zweiten Ende 20 aus erstreckenden Befestigungspartie 22 zum Durchführen durch die Wandöffnung 26 und mit Befestigungsmitteln zum Befestigen an der Wand. Die Durchführvorrichtung 10, 110, 210, 310 weist erfindungsgemäß ein einen sich vom ersten Ende 18 aus erstreckenden ersten geraden Abschnitt 34 des Aufnahmekanals 16 aufweisendes Schlauchaufnahmeteil 12 auf und ein die Befestigungspartie 22 sowie einen sich vom zweiten Ende 20 aus erstreckenden zweiten geraden Abschnitt 36 des Aufnahmekanals 16 aufweisendes, um mindestens eine Drehachse 56 gegenüber dem Schlauchaufnahmeteil 12 begrenzt von einer Linearausrichtung, in der die Mittelachsen 38 der beiden geraden Abschnitte 34, 36 zueinander parallel verlaufen, in mindestens eine Querausrichtung, in der die Mittelachsen 38 der beiden geraden Abschnitte 34, 36 quer zueinander verlaufen, verdrehbares wandseitiges Teil 14.

## Patentansprüche

1. Vorrichtung zum Durchführen von Leitungen durch eine Öffnung (26) in einer Wand (24) mit einem sich von einem ersten zu einem zweiten Ende (18, 20) erstreckenden Aufnahmekanal (16) für die Leitungen, mit einer Einführöffnung (28) zur Aufnahme eines Endabschnitts eines Schutzschlauchs (30) am ersten Ende (18), mit Mitteln (32) zum Fixieren des Schutzschlauchs (30), mit einer sich vom zweiten Ende (20) aus erstreckenden Befestigungspartie (22) zum Durchführen durch die Wandöffnung (26) und mit Befestigungsmitteln zum Befestigen an der Wand, **gekennzeichnet durch** ein einen sich vom ersten Ende (18) aus erstreckenden ersten geraden Abschnitt (34) des Aufnahmekanals (16) aufweisendes Schlauchaufnahmeteil (12) und ein die Befestigungspartie (22) sowie einen sich vom zweiten Ende (20) aus erstreckenden zweiten geraden Abschnitt (36) des Aufnahmekanals (16) aufweisendes, um mindestens eine Drehachse (56) gegenüber dem Schlauchaufnahmeteil (12) begrenzt von einer Linearausrichtung, in der die Mittelachsen (38) der beiden geraden Abschnitte (34, 36) zueinander parallel verlaufen, in mindestens eine Querausrichtung, in der die Mittelachsen (38) der beiden geraden Abschnitte (34, 36) quer zueinander verlaufen, verdrehbares wandseitiges Teil (14).

2. Vorrichtung nach Anspruch 1, **dadurch gekennzeichnet, dass** das Schlauchaufnahmeteil (12) und das wandseitige Teil (14) mittels eines Kugelgelenks (40) miteinander verbunden sind, wobei ein erstes der Teile (12, 14) einen im zweiten Teil (14, 12) aufgenommenen Gelenkabschnitt (42) aufweist.

3. Vorrichtung nach Anspruch 2, **dadurch gekennzeichnet, dass** das erste Teil (12, 14) einen zumindest abschnittsweise kugelsegmentförmigen Gelenkabschnitt (42) aufweist, der in einem Gelenkabschnitt (44) des zweiten Teils (14, 12) aufgenommen und bis zu einem Anschlag verdrehbar ist.

4. Vorrichtung nach Anspruch 3, **dadurch gekennzeichnet, dass** der Gelenkabschnitt (44) des zweiten Teils (14, 12) zumindest abschnittsweise kegelstumpfförmig ist.

5. Vorrichtung nach Anspruch 1, **dadurch gekennzeichnet, dass** das Schlauchaufnahmeteil (12) und das wandseitige Teil (14) mittels eines Drehgelenks (50) verbunden sind, das eine Drehachse (56) aufweist, die senkrecht zu jeder der beiden Mittelachsen (38) der geraden Abschnitte (34, 36) verläuft.

6. Vorrichtung nach Anspruch 5, **dadurch gekennzeichnet, dass** die Drehachse (56) durch zwei von einander abgewandten Seiten eines ersten der beiden Teile (12, 14) abstehenden Zapfen (52) gebildet wird, die in Ausnehmungen (54) im zweiten Teil (14, 12) eingreifen.

7. Vorrichtung nach Anspruch 5 oder 6, **dadurch gekennzeichnet, dass** das Schlauchaufnahmeteil (12) und das wandseitige Teil (14) in der Linearausrichtung auf Stoß aneinander anliegen.

8. Vorrichtung nach einem der Ansprüche 5 bis 7, **dadurch gekennzeichnet, dass** der Aufnahmekanal (16) zwischen dem Schlauchaufnahmeteil (12) und dem wandseitigen Teil (14) zu einer Öffnung (58) hin offen ist und dass die Ränder (60) der Öffnung (58) konzentrisch zur Drehachse (56) verlaufen und einen Anschlag beim gegenseitigen Verdrehen der beiden Teile (12, 14) bilden.

9. Vorrichtung nach Anspruch 8, **dadurch gekennzeichnet, dass** das Drehgelenk (50) von einem Faltenbalg (62) eingeschlossen ist, der am Schlauchaufnahmeteil (12) und am wandseitigen Teil (14) befestigt ist und die Öffnung (58) verschließt.

10. Vorrichtung nach Anspruch 5, **dadurch gekennzeichnet, dass** das Drehgelenk (50) durch eine Partie (64) eines ersten der Teile (12, 14) mit einer zylindrischen Innenkontur und eine Partie (66) des zweiten Teils (14, 12) mit komplementärer zylindrischer Außenkontur gebildet wird, wobei das zweite Teil (14, 12) durch eine Öffnung (70) im Zylindermantel (64) des ersten Teils (12, 14) durchgeführt ist.

11. Vorrichtung nach Anspruch 10, **dadurch gekennzeichnet, dass** die Öffnung (70) im Zylindermantel (64) des ersten Teils (12, 14) stets vom zweiten Teil (14, 12) ausgefüllt wird.

12. Vorrichtung nach Anspruch 1, **dadurch gekennzeichnet, dass** das Schlauchaufnahmeteil (12) und das wandseitige Teil (14) jeweils einen elliptischen Querschnitt aufweisen und entlang einer Kreisringfläche (72) auf Stoß aneinander anliegen, wobei die Mittelachsen (38) der beiden geraden Abschnitte (34, 36) des Aufnahmekanals (16) quer zur Flächennormalen der Kreisringfläche (72) verlaufen.

13. Vorrichtung nach einem der vorangehende Ansprüche, **dadurch gekennzeichnet, dass** zwischen dem Schlauchaufnahmeteil (12) und dem wandseitigen Teil (14) eine Dichtung (74) angeordnet ist.
